# EUROPÄISCHE PATENTSCHRIFT

(11) **EP 1 394 299 B1**
(45) Veröffentlichungstag und Bekanntmachung des Hinweises auf die Patenterteilung: **08.06.2005**
(21) Anmeldenummer: 03006586.6
(22) Anmeldetag: 24.03.2003
(51) Int. Cl.: D03D 15/04, H01B 3/50, B29C 63/06, B29C 61/02

(54) **Textiles Band**
Woven band
Bande textile

(30) Priorität: 22.03.2002 DE 10212918
(43) Veröffentlichungstag der Anmeldung: 03.03.2004
(73) Patentinhaber: Iprotex GmbH & Co. KG, 95213 Münchberg (DE)
(72) Erfinder: Kesch, Friedhard, 96364 Marktrodach (Oberrodach) (DE); Piwonski, Timo, 96364 Marktrodach (DE); Böhm, Alexander Karl-Heinz, 95213 Münchberg (DE)
(74) Vertreter: Fischer, Matthias, Dipl.-Ing.

(56) Entgegenhaltungen:
- EP-A- 0 886 687
- DE-A- 3 124 771
- US-A- 4 576 666
- US-A- 4 820 561

## Beschreibung

Die vorliegende Erfindung betrifft ein textiles Band zur Ummantelung von sich längs erstreckenden Gegenständen.

Im Bereich der Ummantelung von längsgestreckten Gegenständen, wie beispielsweise Kabeln, Leitungen, Profilen und dgl. müssen aufgrund montagetechnischer Gegebenheiten die Umhüllungsmaterialien nachträglich aufgebracht werden, um die längsgestreckten Gegenstände gegen schädigende Einflüsse, wie zum Beispiel mechanische, thermische und dgl. Belastungen zu schützen. Bekannt sind hierzu Herstellungsverfahren, wie Flechten, Weben Stricken und Wirken von Bandmaterialien, Extrusion von Bändern und geschnittenen Folien und dergleichen.

Aus dem US-Patent Nr. 4,820,561 von Pithouse et al. ist ein in der Dimension rückstellbarer Gegenstand in einer Verbundstruktur eines wärmerückstellbaren Gewebes mit einer Polymermatrix bekannt, das z.B. zur Ummantelung von Kabelspleißstellen und dergleichen eingesetzt wird, um die entsprechende Kupplungsstelle gegen Feuchtigkeit, Chemikalien sowie Beschädigung durch Tiere zu schützen. Hierbei wird das Ummantelungsmaterial mit einer Beschichtung aus adhäsivem Material versehen, welches bei der Montage zu dem zu schützenden Gegenstand zeigend montiert wird. Die Beschichtung des gesamten Mantelmaterials mit einem adhäsiven Gewebe ist aufwendig und kostspielig und macht die Ummantelung voluminös. Die hier gezeigte Ummantelung wird aus einem Flächengebilde zu einem rohrförmigen Gegenstand geformt und mit einem separaten Verschlußmittel zu einer geschlossenen Ummantelung geformt.

Aus dem US-Patent 4,576,666 von Harris et al. ist ein wärmerückstellbarer Gegenstand bekannt, der ebenfalls aus einem flächenmäßigen Gebilde zu einem Rohr geformt und mit einem Verschlußmittel versehen ist. Vor dem thermischen Schrumpfen des zu einem rohrförmigen Gebilde geformten Gewebes, muß ein separates Verschlußmittel angebracht werden, das außerdem noch gegen die Außenseite des umhüllenden Gegenstands aufträgt und, sofern der zu umhüllende Gegenstand eine nicht geradlinige Form hat, unter Zug- oder Druckspannung steht, wobei in sollen Fällen die Umhüllung relativ sperrig wird.

Aus dem europäischen Patent EP 0 886 687 B1 (Federal Mogul) ist ein thermisch schützender Schlauch bekannt, der aus einem gewebten Band besteht, in das in Schußrichtung Hybridgarne eingebracht sind, die elastisch fixiert werden, wonach der Schlauch eine Hülse bildet. Eine solche elastische Fixierung wird typischerweise durch das Umwickeln eines Schlauches, der elastisch auf einem Dorn fixierbare Filamente aufweist, und durch Anwendung von Hitze verliehen, während das Material im umwickelten Zustand verbleibt. Diese Herstellung ist aufwendig und umständlich und hat weitere folgende Nachteile. Das hierbei hergestellte Hülsenmaterial ist eine sich in Querrichtung zusammenrollende Endlosware und wird im Anschluß an den eben beschriebenen Verformungsprozeß auf variable Stücklängen geschnitten. Die Endlosware (eingerollt mit geringfügiger Überlappung im Kantenbereich für eine vollflächige Bedeckung des zu ummantelnden Gegenstandes) erlaubt keine Aufmachung als Meterware, da die Ware im Falle einer Rollenaufmachung zu stark deformiert oder geknickt würde, es sei denn, der Durchmesser einer zur Aufwicklung verwendeten Kabeltrommel ist großzügig genug bemessen. Dies ist aber aufgrund des geringen Artikelgewichts - man spricht hier von einem "leichten" Bandgewebe - unrealistisch und würde auch große logistische Nachteile mit sich bringen. Der Endanwender kann also lediglich geschnittene Längen beziehen oder (wie beispielsweise Installationsrohre) Stangenware erhalten, was aber wiederum einen hohen Nachteil durch Warenverschnitt bei der Konfektion mit sich bringt. Das im eben diskutierten europäischen Patent offenbarte Verfahren hat noch einen weiteren Nachteil. Bei der Fertigung besteht die Gefahr, daß die Ware sich vor der hier eingesetzten Schikane im Endlosverformungsprozeß verdreht und im Längslauf des Bandes ein sogenannter Korkenziehereffekt auftritt.

Es ist eine Aufgabe der vorliegenden Erfindung, ein textiles Band vorzuschlagen, das um sich längs erstreckende Gegenstände wie Stangen, Schläuche, Profile und dergleichen gelegt und dort fest, sicher und einfach angebracht werden kann und außerdem kostengünstig herzustellen ist, wobei die aus dem Stand der Technik bekannten Nachteile möglichst vermieden werden sollen.

Die Aufgabe wird gelöst mit einem Band gemäß Anspruch 1. Das textile Band kann ein gewebtes, geflochtenes, gestricktes oder gewirktes Band sein, das auf einer Bandseite Fäden aus hochschrumpfendem Material aufweist, die im wesentlichen quer über die Bandbreite verlaufen und nur mit einem Teil der Fäden des Bandes verbunden sind. Das erfindungsgemäße textile Band bietet gegenüber dem aus dem Stand der Technik bekannten Material eine Reihe von Vorteilen. So ist es als Band äußerst platzsparend aufwickelbar, was hohe Einsparungen bei Lager- und Transportkosten mit sich bringt. Das als Endlosware herstellbare Band kann am Verwendungsort exakt auf die gewünschte Länge geschnitten, am Einsatzort verbaut und dann einfach mittels Heißluftföhn eingerollt werden. Hierzu ist das Band, das mit der Bandseite, die Fäden aus hochschrumpfendem Material aufweist, auf den zu umwickelnden Gegenstand zu legen und dort herumzuwickeln. Aufgrund der sich unter Wärme zusammenziehenden hochschrumpfenden Fäden zieht sich das Band einseitig zusammen und wölbt sich um den umwickelten Gegenstand genau entsprechend seiner Form. Dadurch ergibt sich eine einfache und sichere Umhüllung bei gleichzeitig sehr geringem Anteil an Warenverschnitt. Da das erfindungsgemäße Band sehr platzsparend aufgewickelt werden kann, führt die relativ hohe Lauflänge einer Packungseinheit zu einer Verringerung der Rüstzeiten, was wiederum eine Kostenersparnis bedeutet. In einer vorteilhaften Weiterbildung der Erfindung wird das Band gewebt, wobei Oberschußfäden aus hochschrumpfendem Material eingewebt werden, die über die Bandbreite nur mit einem Teil der Kettfäden verwebt sind. Das erfindungsgemäße Band kann aufgrund der doppellagigen Schußfadenverlegung mit hochschrumpfendem Material in einer oberen Gewebelage und schrumpfarmem Material in einer unteren Gewebelage in einem Verformungsprozeß mittels Heißluft an Ort und Stelle in Querrichtung einrollen. Diese Art Manschette kann montagefreundlich um jegliche längsgestreckten Gegenstände, Schläuche, Profile und dergleichen herumgelegt und fest angeordnet werden. Der hier eingearbeitete Oberschußfaden aus hochschrumpfendem Material zieht sich beim Erhitzen zusammen und verursacht das Einrollen des Bandes quer zur Bandlängsachse aufgrund thermischer Beaufschlagung.

In einer vorteilhaften Weiterbildung der Erfindung sind die Oberschußfäden aus hochschrumpfenden Material mit Kettfäden aus Monofil-Material verwebt. Hierdurch ergibt sich ein in Längsrichtung etwas steiferes Gewebe, das für bestimmte Anwendungsfälle bevorzugt wird. Die hochschrumpfenden Oberschußfäden können aus Monofil- oder auch Multifilgarnen gebildet werden.

Weitere Merkmale und Vorteile der Erfindung ergeben sich aus den Unteransprüchen.

Zum besseren Verständnis der Erfindung wird diese im Anschluß unter Bezugnahme auf die beiliegende Zeichung anhand eines Ausführungsbeispiels kurz beschrieben.
- Fig. 1: zeigt in schematischer Darstellung einen Querschnitt eines erfindungsgemäßen Bandes.
- Fig. 2: zeigt in schematischer Darstellung einen Längsschnitt eines erfindungsgemäßen Bandes.
- Fig. 3: zeigt schematisch in auseinandergezogener Darstellung die Anordnung von oberer Gewebelage und unterer Gewebelage eines erfindungsgemäßen Bandes, sowie die Anbindung untereinander.

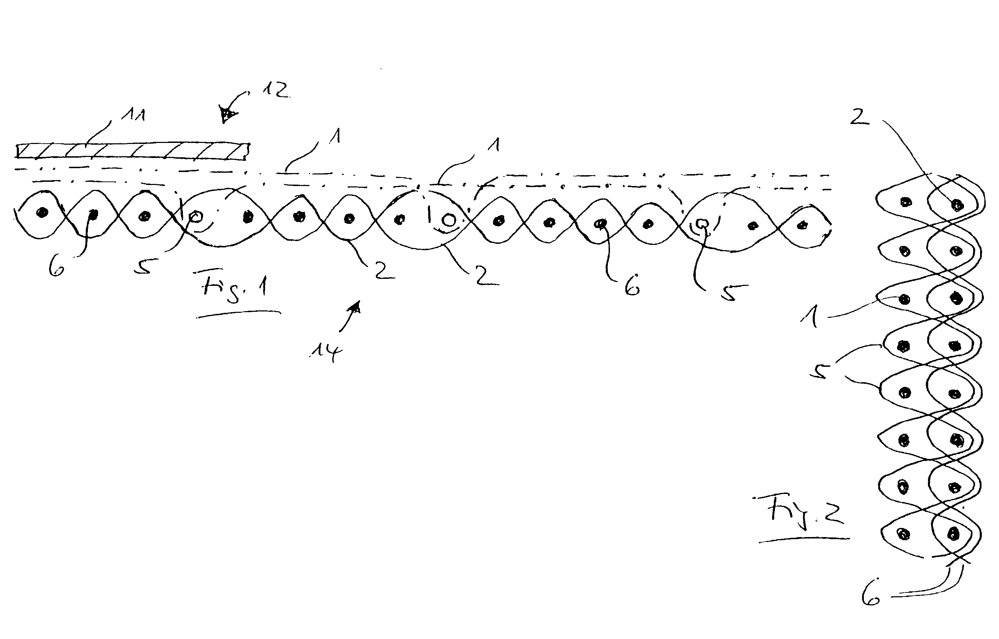

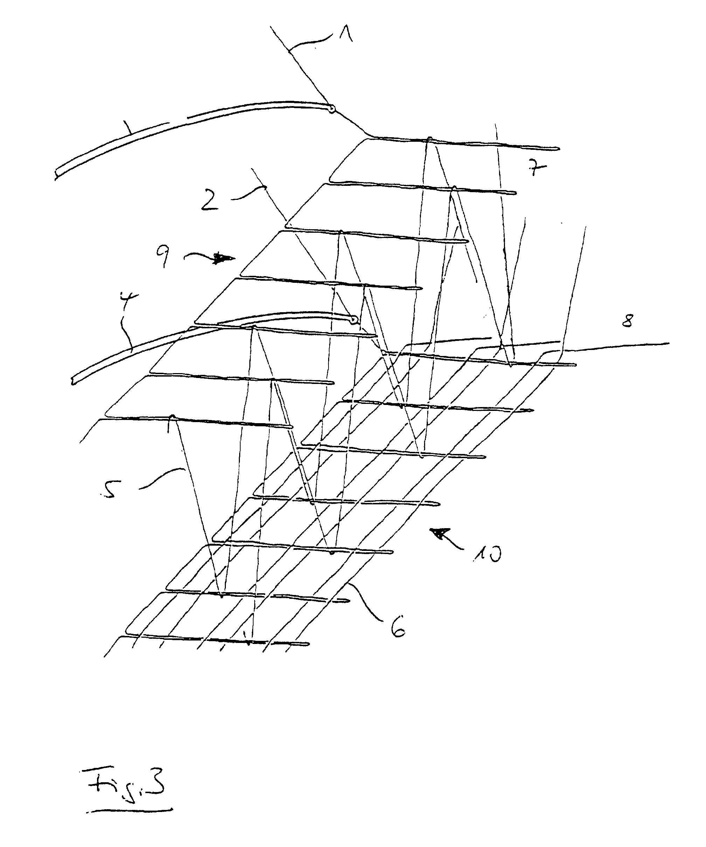

Der in Fig. 1 dargestellte Querschnitt eines erfindungsgemäßen Bandes enthält, hier im Schnitt dargestellte, Unterkettfäden 6, die von Unterschußfäden 2 umschlungen werden. Die Schußrichtung der Unterschußfäden 2 verläuft in Fig. 1 von links nach rechts und umgekehrt. Ebenfalls in Schußrichtung verlaufen hochschrumpfende Monofil-Schußfäden 1, die mit Oberkettfäden 5 abbinden. Die Oberkettfäden 5 binden an den Unterschußfäden 2 an (Fig. 2).

In Fig. 1 ist ein adhäsives Material 11 gezeigt, welches auf der Bandseite angeordnet ist, die die Fäden 1 aus hochschrumpfendem Material aufweist. Das adhäsive Material 11 ist hier nur bereichsweise dargestellt. Es kann beim Erwärmen des erfindungsgemäßen Bandes die Fixierung desselben am zu ummantelnden Gegenstand zusätzlich verbessern und eine feste Verklebung schaffen.

Fig. 3 zeigt in einer auseinandergezogenen perspektivischen Darstellung eine obere Gewebelage 9 und eine untere Gewebelage 10, die über ein oberes Webfach 7 und ein unteres Webfach 8 erzeugt werden. Eine gebrochen dargestellte obere Schußnadel 3 verlegt den hochschrumpfenden Monofil-Schußfaden 1 in der oberen Weblage 9. Eine gebrochen dargestellte untere Schußnadel 4 verlegt erfindungsgemäß einen schrumpfarmen Multifil-Schuß in der unteren Gewebelage 10. Aus Fig. 3 ist gut zu erkennen, wie die Oberkette 5 mit Anbindung an den Unterschuß (Monofil) verläuft. Der schrumpfarme Multifil-Schuß 2 besteht vorzugsweise aus Polyester-Material, wogegen der hochschrumpfende Oberschußfaden vorzugsweise aus einem thermoplastischen Werkstoff, wie z. B. Polyolefinen (Polyester, LDPE, HDPE, LLDPE etc.) oder einem über die Verreckungsintensität modifizierten Polyamid bestehen kann.

Das in den Figuren 1 bis 3 schematisch dargestellte erfindungsgemäße Band kann vorteilhafterweise in geringstem Verpackungsvolumen transportiert und an Ort und Stelle in der gewünschten Länge geschnitten und quer zur Längsachse geschrumpft werden. Ein Kunde kann das erfindungsgemäße Band in großen Gebinden mit geringem Lagerplatzbedarf zwischenlagern und verarbeiten, bei Bedarf auf Länge schneiden und "verbauen". Hierbei fällt nahezu kein Warenverschnitt an.

## Patentansprüche

1. Schrumpfbares textiles Band zum Umhüllen von länglichen Gegenständen, aus einem Grundgewebeband und einseitig daran angebrachten schrumpffähigen Endlos-Fäden, **dadurch gekennzeichnet, daß** die hochschrumpffähigen Endlos-Fäden (1) quer zur Bandbreite verlaufen und nur einen Teil der Fäden des schrumpfarmen Grundgewebes (10) umschlingen.

2. Band nach Anspruch 1, **dadurch gekennzeichnet, daß** es gewebt ist und Oberschußfaden (1) aus hochschrumpfendem Material aufweist, die über die Bandbreite nur mit einem Teil der Kettfäden verwebt sind.

3. Band nach Anspruch 2, **dadurch gekennzeichnet, daß** diese Kettfäden Monofilfäden (5) sind.

4. Band nach Anspruch 3, **dadurch gekennzeichnet, daß** zwischen den Monofil-Kettfäden vier Multifil-Kettfäden (6) angeordnet sind.

5. Band nach einem der Ansprüche 1 bis 4, **dadurch gekennzeichnet, daß** auf der Bandseite (12), die die Fäden aus hochschrumpfendem Material aufweist, adhäsives Material (11) angeordnet ist.

6. Band nach Anspruch 5, **dadurch gekennzeichnet, daß** das adhäsive Material ein aufkaschiertes Doppelklebeband (11) ist.

7. Band nach Anspruch 5, **dadurch gekennzeichnet, daß** das adhäsive Material aus Kettfäden aus Schmelzklebermaterial besteht.

## Claims

1. Shrinkable fabric tape for sheathing elongated items, comprising a woven tape backing and applied to one side thereof, shrinkable endless threads, **characterized in that** said highly shrinkable endless threads (1) run crosswise to the width of the tape and wrap only a portion of the threads of said low-shrink woven backing (10).

2. The tape as set forth in claim 1, **characterized in that** said tape is woven and comprises face weft threads (1) of a highly shrinkable material woven only with a portion of the warp threads over the width of said tape.

3. The tape as set forth in claim 2, **characterized in that** said warp threads are monofil threads (5).

4. The tape as set forth in claim 3, **characterized in that** four multifil warp threads (6) are disposed between said monofil warp threads.

5. The tape as set forth in any of the claims 1 to 4, **characterized in that** adhesive material (11) is arranged on the tape side (12) comprising said threads of a highly shrinkable material.

6. The tape as set forth in claim 5, **characterized in that** said adhesive material is a laminated double-sided adhesive tape (11).

7. The tape as set forth in claim 5, **characterized in that** said adhesive material comprises warp threads of a hot-melt adhesive.

## Revendications

1. Bande textile susceptible de se rétracter pour enrober des objets oblongs, consistant en une bande de tissu de base et des fils sans fin aptes à se rétracter, appliqués d'un côté de celle-ci, **caractérisée en ce que** les fils sans fin (1) hautement aptes à se rétracter s'étendent transversalement par rapport à la largeur de la bande et n'enlacent qu'une partie des fils du tissu de base (10) peu rétractable.

2. Bande selon la revendication 1, **caractérisée en ce qu'**elle est tissée et présente des fils de trame supérieurs (1) en matière hautement rétractable, qui sur la largeur de la bande ne sont tissés qu'avec une partie des fils de chaîne.

3. Bande selon la revendication 1, **caractérisée en ce que** lesdits fils de chaîne sont des monofils (5).

4. Bande selon la revendication 3, **caractérisée en ce qu'**entre les fils de chaîne monofils quatre fils de chaîne multifils (6) sont disposés.

5. Bande selon l'une quelconque des revendications 1 à 4, **caractérisée en ce que** du côté de la bande (12) qui présente les fils en matière hautement rétractable, une matière adhésive (11) est disposée.

6. Bande selon la revendication 5, **caractérisée en ce que** la matière adhésive est une double bande collante (11) contre-collée.

7. Bande selon la revendication 5, **caractérisée en ce que** la matière adhésive consiste en fils de chaîne en matière de colle fusible.
